# DEMANDE DE BREVET EUROPEEN

(11) **EP 1 246 485 A1**
(43) Date de publication de la demande: **02.10.2002**
(21) Numéro de dépôt: 02290743.0
(22) Date de dépôt: 25.03.2002
(51) Int. Cl.: H04Q 7/30

(54) **Procédé de transmission bidirectionnelle synchronisée par paquets**

(30) Priorité: 29.03.2001 FR 0104253
(71) Demandeur: ALCATEL, 75008 Paris (FR)
(72) Inventeur: Dupuy, Pierre, 75017 Paris (FR)
(74) Mandataire: El Manouni, Josiane

(57) **Abrégé**

La présente invention concerne un procédé de transmission bidirectionnelle synchronisée par paquets entre une station de base d'un réseau de radiocommunication et un équipement de transcodage comprenant au moins deux transcodeurs, faisant partie d'un réseau téléphonique fixe ou analogue et relié à cette station, en particulier pour transmettre des données ou informations sonores ou vocales.

Procédé caractérisé en ce qu'il consiste à utiliser en liaison descendante un ordre de priorité pour les tranches ou intervalles de temps d'une trame, inversé par rapport à celui appliqué en liaison montante.

## Description

La présente invention concerne le domaine de la transmission entre des réseaux de télécommunications, notamment la transmission de la parole et des sons entre un réseau de télécommunications fixe et un réseau de radiocommunication du type GSM (Global System for Mobile - Système mondial pour portatifs ou portables) ou analogue, et a pour principal objet un procédé de transmission bidirectionnelle par paquets dans un réseau présentant des délais de transmission minimisés, notamment ceux dus à la mise en paquets des données et informations en vue de leur transmission vers un réseau de radiocommunication.

Les réseaux de radiocommunication comprennent tous essentiellement deux types de composantes, à savoir, d'une part, les stations de transmission de base (BTS) réparties sur le territoire couvert par le réseau concerné et constituant un découpage en cellules et, d'autre part, les équipements de transcodage (TC), reliés entre eux, ou avec d'autres dispositifs ou appareils reliés au réseau, par l'intermédiaire desdites stations de base.

Or, il arrive souvent que de tels réseaux de radiocommunication mobile soient en connexion avec le réseau téléphonique fixe, ce qui nécessite un transcodage de la parole et des sons d'une forme compatible avec un type de réseau en une forme compatible avec l'autre type et vice versa.

Dans le présent document, le terme "montant" qualifie toute liaison ou transmission d'un terminal du réseau téléphonique fixe vers un réseau de radiocommunication, c'est-à-dire vers les stations de base, et le terme "descendant" toute liaison ou transmission dans la direction opposée.

La présente invention vise plus particulièrement les opérations de conditionnement et de déconditionnement des données ou informations transmises au cours d'une communication bidirectionnelle entre une station de base et un ou plusieurs terminaux d'un réseau téléphonique fixe.

Ces opérations sont généralement basées sur la mise en paquets des données et informations à transmettre par application du protocole IP ("Internet Protocol" - protocole internet).

Dans le cas particulier, pris comme exemple alternatif, d'un sous-système de station de base (BSS) d'un circuit GSM, le retard ou délai vocal est défini dans la spécification GSM 03.05. Le passage de circuit au protocole IP introduit des changements significatifs dans le bilan des délais et retards.

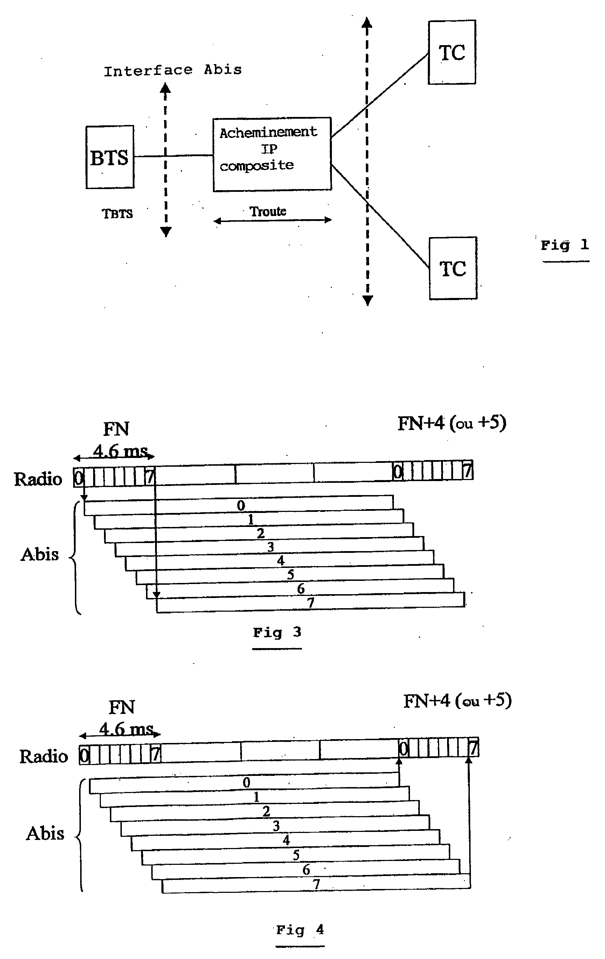

La figure 1 des dessins annexés représente de manière schématique et symbolique une architecture type de transmission de parole et de son entre un réseau téléphonique fixe et un réseau de radiocommunication.

Le bloc "acheminement IP composite" (référencé CR sur la figure 1) réalise les fonctions suivantes :
- liaison montante : il ouvre la trame IP composite et retransmet chaque paquet vers le transcodeur TC approprié ;
- liaison descendante : il recueille les paquets IP vocaux sortant du transcodeur TC dans les trames IP composites et les envoie à la station BTS appropriée.

En plus du retard de mise en paquet traité dans ce document, on peut identifier les délais suivants :
- TBTS : il s'agit du retard entre la réception du dernier bit de la tranche de temps au niveau de l'antenne jusqu'à la transmission du premier bit décodé sur l'interface Abis qui assure la communication terrestre entre les BTS et le BSC (Base Station Controler - contrôleur de stations de base). Il existe un retard correspondant dans la liaison descendante.
- Troute : il s'agit du délai entre la fin de la transmission d'une trame composite IP à la fin de la station BTS et la réception de cette trame dans le cadre de routage IP composite. Un délai éventuellement différent existe dans la direction de la liaison descendante.
- TTC représente le délai entre la réception d'une trame composite IP dans le cadre de routage IP composite et la réception d'une trame vocale TCH contenue dans cette trame IP dans le champ TC. Un délai éventuellement différent existe dans le sens de la liaison descendante.

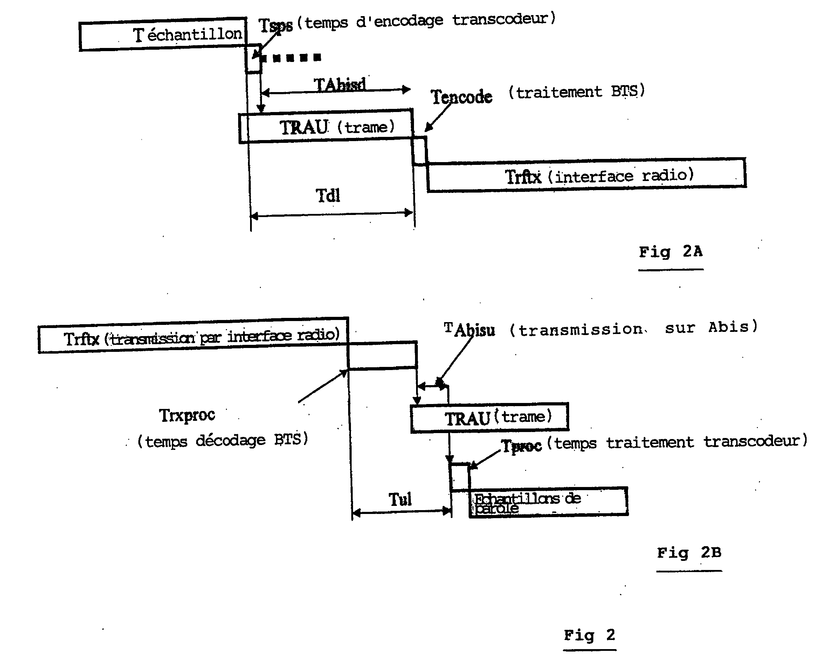

Les figures 2A et 2B indiquent la planification de la transmission de la liaison descendante (les abréviations sont extraites de la spécification GSM 03.05), respectivement au niveau de l'interface Abis et de l'interface Radio.

Dans les deux cas, on peut noter que la trame TRAU est lancée légèrement à l'avance pour minimiser le temps de transmission : tous les bits de l'en-tête qui sont indépendants du résultat du codage ou du décodage sont émis à l'avance.

Le délai qui dépend du principe de transmission est Tdl pour la liaison descendante et Tul pour la liaison montante. Le délai Tdl comprend le temps mis par le codeur pour délivrer les premiers bits vocaux codés et le temps pour transmettre la totalité d'entre eux sur l'interface Abis. Le délai Tul comprend le temps pour transmettre suffisamment de parole codée au transcodeur pour qu'il puisse la décoder et commencer à générer de la parole.

Pour un plein débit, la répartition du temps peut être, par exemple, définie dans la spécification 03.05 précitée.

En liaison descendante, la partie intéressante dans le cadre de la présente demande est Tsps + Tabisd = 19 ms (Interface Abis de 16 Kbits/s).

Le délai Tsps représente le temps nécessaire pour que le transcodeur génère le premier bit d'information vocale sur l'interface Abis.

Il convient de noter que dans une réalisation pratique, la définition du temps Tsps peut diffèrer de ce qui précède, dans la mesure où la spécification 03.05 suppose que le codeur vocal est capable de fournir les bits deux par deux au module pilote de la transmission. En réalité, les contraintes de logiciel sont telles que le codeur peut délivrer des salves de bits plus longues en augmentant ainsi la valeur du temps Tsps.

En outre, cette technique utilisée pour le mode de circuit ne peut pas être utilisée avec une transmission IP : le codage de la parole doit être complètement terminé avant de la fournir au module pilote de la transmission. Ceci signifie que le temps Tsps (1,6 ms) doit être remplacé par le temps Ttransc (8 ms).

En raison d'améliorations spectaculaires des processeurs DSP (traitement numérique du signal), les temps Tsps et Ttransc sont actuellement environ : Tsps = 0,2 ms et Ttransc = 0,8 ms.

Par ailleurs, il existe une marge de 1 ms dans le BSC (contrôleur de station de base) qui peut être utilisée pour d'autres buts.

En liaison montante, et en relation avec la spécification précitée, la partie intéressante est Tabisu = 4 ms.

Au total, le temps qui dépend du principe de transmission est celui qui s'écoule de l'entrée du codeur à l'entrée du décodeur, c'est-à-dire Tabisd+Tabisu+Transc.

Les autres parties du délai sont indépendantes du principe de transmission.

Il existe par ailleurs une marge de 4 ms (station BTS et contrôleur BSC).

Pour un demi débit, la spécification 03.05 ne spécifie aucune valeur. Il peut être valablement proposé de prendre les hypothèses suivantes :
- Ttransc = 7 ms
- Tsps = 1,4 ms (20 % de Ttransc)
- TAbisd = 16,9 ms
- TAbisu = 9,6 ms

D'autres sources de délais au niveau de la transmission sont liées aux contraintes de l'interface radio.

En effet, la parole est transmise sur l'interface radio avec la planification suivante (extraite de la spécification technique GSM 05.02) des canaux logiques sur les canaux physiques (voir sections 6-3, 6-4 et 6-5 de la spécification précitée).

| Désignation canal | N° du sous-canal | Direction | Attributions de tranches de temps autorisées | Longueur de répétition dans les trames TDMA | Planification des blocs entrelacés dans les trames TDMA |
|---|---|---|---|---|---|
| TCH/FS | | D&U² | 0...7 | 13 | B0(0...7), |
| | | | | | B1(4...11), |
| | | | | | B2(8...11,0...3) |
| TCH/FS | 0 | D&U² | 0...7 | 13 | B0(0,2,4,6), |
| | | | | | B1(4,6,8,10), |
| | | | | | B2(8, 10, 0,2), |
| | | | | | B0(1,3,5,7), |
| | | | | | B1(5,7,9,11), |
| | | | | | B2(9,11,1,3) |

La figure 3 des dessins annexés indique comment la transmission de la liaison montante sur l'interface Abis est planifiée en fonction de la réception de la dernière salve des blocs vocaux (FN : numéro de trame ; FN + 4 : numéro de trame + 4 - 4^{ème} trame suivante).

La figure 4 des dessins annexés indique comment les blocs vocaux de la liaison descendante sont planifiés sur l'interface Abis, en fonction de la transmission de la première salve correspondante sur l'interface radio.

On notera que sur ces deux figures, il est supposé qu'il y a un délai de traitement nul dans la station BTS.

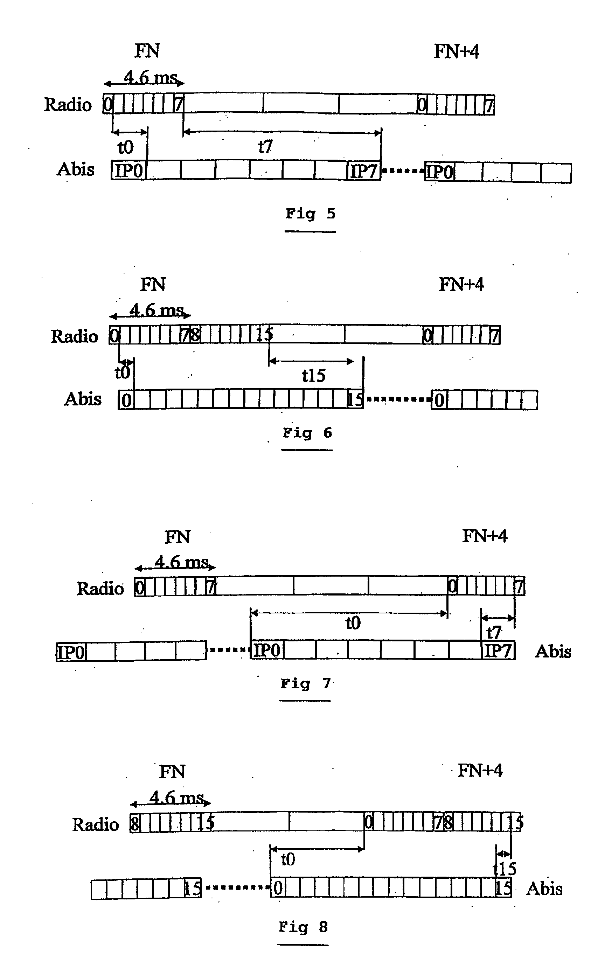

A partir des figures 3 et 4, on peut voir que la planification des blocs vocaux sur l'interface radio est très sporadique : durant un quart du temps, toutes les informations sont utilisées par la station BTS ou sont rendues disponibles. Cette nature sporadique est masquée dans le mode circuit sur l'interface Abis, dans la mesure où tous les canaux de trafic utilisent des canaux physiques indépendants.

Il sera à présent procédé à l'analyse des délais induits en liaison montante et en liaison descendante en relation avec des communications dans un réseau GSM en utilisant le protocole IP. Il est supposé que la station BTS peut générer le flux de données sans aucune limitation due à l'architecture interne et la description suivante est faite pour une station BTS à 3 x 4 TRX (émetteurs-récepteurs).

Une trame IP composite est construite pour transporter plusieurs canaux de trafic.

A titre de premier exemple, on suppose qu'elle contient 12 canaux TCH (canaux de trafic).

En supposant qu'un bloc vocal à plein débit contient 37 octets et que le trafic de service du protocole IP est de 6 octets, ceci représente une trame IP de 486 octets, transmise en 1,96 ms. Pour un demi-débit, le bloc vocal contient 18 octets. Dans les deux cas, il est supposé qu'il existe un trafic de service de 4 octets pour l'adressage du sous-canal et la commande du transcodeur.

| | Octet de parole | Contrôle + routage | Total canal | Trame IP (octets) | Délai de transmission |
|---|---|---|---|---|---|
| Plein débit | 32,5 | 4,5 | 37 | 450 | 1,84 ms |
| Demi débit | 14 | 4 | 18 | 222 | 0,91 ms |

Le temps de transmission comprend une surcharge de trafic de service de 1,6 % pour le bourrage de bits du protocole HDLC.

### Délai dans la liaison montante

Le principe le plus simple consiste à émettre les trames IP dans le même ordre que celui selon lequel elles sont décodées, comme indiqué sur la figure 5 annexée, pour le plein débit.

Avec les chiffres d'entrée donnés, le temps de transmission varie de 1,84 ms (t0) à 10,71 ms (t7).

En moyenne, le temps de transmission est de 6,3 ms, c'est-à-dire plus que dans le mode de circuit (4 ms).

Comme on peut le voir, il existe toujours un certain temps de réserve entre la fin de IP7 et le bloc IP0 suivant : 3,6 ou 8,2 ms (suivant la séquence 4/4/5 définie dans la spécification technique TS 05.02).

La figure 6 des dessins annexés illustre le principe de la figure 5 dans le cas du demi-débit.

Le délai varie, dans ce cas, de 0,91 à 5,80 ms. La moyenne (3,4 ms) est inférieure à celle du mode de circuit.

### Délai de la liaison descendante

En fait, plusieurs problèmes empêchent un arrangement planifié sur la liaison descendante, à savoir que :
- un alignement fin dans le temps n'est pas possible au moment de l'établissement de l'appel, dans la mesure où le temps aller et retour jusqu'au transcodeur n'est pas connu. En effet, les premières trames IP arrivent de façon aléatoire, en introduisant des retards inattendus sur les connexions établies ;
- dans la mesure où la partie de l'équipement chargée de générer la trame IP composite n'est normalement pas consciente de l'organisation des tranches de temps radio, elle recueillera les paquets vocaux entrants de la liaison descendante à mesure qu'ils arrivent, en mélangeant ensemble les blocs vocaux qui ne sont pas nécessairement planifiés pour le même temps de transmission sur l'interface radio, en introduisant une gigue importante ;
- si la station BTS n'est pas avertie du retard de transmission dû au goulet d'étranglement de l'interface Abis, elle essayera d'optimiser le retard à 0 pour toutes les tranches de temps.

Du fait de ces problèmes, tous les paquets arrivent de manière anarchique, résultant en une génération importante de gigue, équivalente au temps de transmission de toutes les trames IP (environ 14,6 ms pour un plein débit ou un demi-débit).

En outre, le transcodeur doit exécuter le codage complet avant de transmettre les informations vocales (Ttransc).

Ceci représente 0,8 ms pour un plein débit et 7 ms pour un demi-débit et rend le total Tdl égal au temps nécessaire pour transmettre toute la trame composite IP de la liaison descendante (14,7 ms pour un plein débit, 14,6 pour un demi-débit) plus le temps de transcodage (0,8 ms pour un plein débit et 7 ms pour un demi-débit).

Au total nous obtenons les valeurs indiquées dans le tableau suivant :

| | Plein débit | | Demi débit | |
|---|---|---|---|---|
| | mini | maxi | mini | maxi |
| Tul | 1,8 | 10,7 | 9 | 5,8 |
| Tdl | 14,7 | 14,7 | 14,6 | 14,6 |
| Ttransc | 0,8 | 0,8 | 7 | 7 |
| Total | 17,3 | 26,2 | 22,5 | 27,4 |

Par rapport à ce qui précède, la présente invention a pour but de minimiser de manière générale les délais de transmission dans le cadre d'une transmission par paquets, et notamment dans le cadre d'une application du type précité.

A cet effet, la présente invention a pour objet un procédé de transmission bidirectionnelle synchronisée par paquets entre une station de base d'un réseau de radiocommunication et un équipement de transcodage, comprenant au moins deux transcodeurs, faisant partie d'un réseau téléphonique fixe ou analogue et relié à cette station, en particulier pour transmettre des données ou informations sonores ou vocales, consistant à utiliser en liaison descendante un ordre de priorité pour les tranches ou intervalles de temps d'une trame, inversé par rapport à celui appliqué ou existant en liaison montante.

La disposition précitée permet par conséquent d'éviter, par compensation relative, un retard excessif pour la tranche ou l'intervalle de temps subissant normalement la pénalisation maximale dans des transmissions montante et descendante consécutives.

Ce résultat est obtenu par une planification optimisée pour la dernière tranche de temps de la liaison montante, de manière à compenser le délai plus long de la liaison montante.

Dans le cas d'une réalisation telle que décrite dans la partie introductive du présent mémoire, la transmission est planifiée, pour le plein débit, comme représenté sur la figure 7 des dessins annexés.

Il résulte, par rapport à l'état de la technique, que les temps de transmission sont exactement inversés : de 10,71 ms pour t0 jusqu'à 1,84 ms pour t7. Le point positif est qu'il n'y a plus de meilleur cas/pire cas : tous les canaux TCH présentent le même temps de transmission de 10,71+1,84=12,65 ms pour la liaison montante et la liaison descendante.

En prenant en compte le délai de transcodage (0,8 ms), ceci résulte en un délai : UL (liaison montante) + DL (liaison descendante) = 13,5 ms.

Par comparaison au mode de circuit, ceci représente un gain d'environ 10 ms.

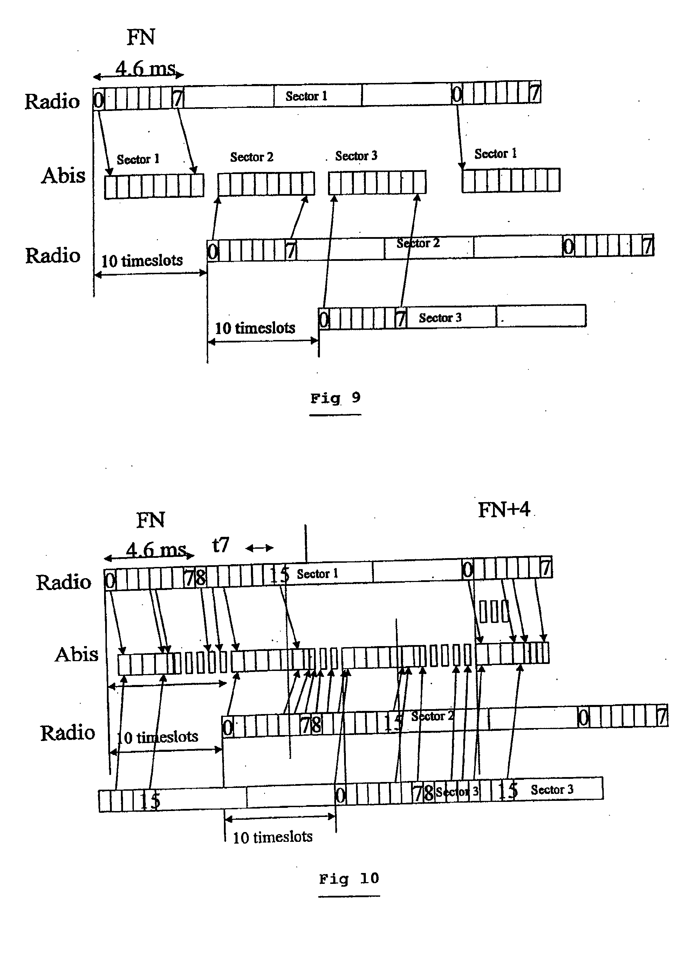

La planification de la transmission pour un demi-débit est représentée sur la figure 8 des dessins annexés.

Comme on peut le voir sur cette dernière figure, la situation est la même que pour un plein débit : le délai UL + DL est de 6,7 ms pour toutes les tranches de temps.

En prenant en compte le délai de transcodage (7 ms), ceci résulte en un délai UL + DL = 13,7 ms.

Par comparaison au mode de circuit, ceci représente un gain d'environ 14 ms.

Avec la solution proposée ci-dessus aboutissant à des paquets IP "synchronisés", le bloc fonctionnel CR de la figure 1 a également une certaine connaissance des numéros des tranches de temps de manière à construire des trames IP appropriées.

En effet, la transmission synchronisée décrite ci-dessus implique que l'équipement chargé de générer la trame IP composite de la liaison descendante connaisse parfaitement l'organisation des tranches ou intervalles de temps ("timeslots" en anglais) de la station BTS.

Ceci signifie que du côté de l'interface Abis, ledit équipement comporte une procédure d'alignement dans le temps avec la station BTS de manière à obtenir des informations de temps de transmission précises. A l'interface avec le transcodeur, il peut utiliser une procédure d'alignement dans le temps (TA : Time Alignement - alignement temporel) plus classique, équivalente à celle utilisée entre la station BTS et le transcodeur TC pour le système GSM ou entre le RNC (Radio Network Controler - Contrôleur de réseau radio) et le transcodeur TC pour le système UMTS (Système universel de télécommunication pour mobiles).

L'homme du métier notera que l'invention évite une gigue supplémentaire quelconque due à la procédure d'alignement dans le temps lorsqu'un nouveau canal est lancé.

Une autre amélioration des délais peut être obtenue en réduisant la taille des trames IP. Par exemple, en ne rassemblant que 6 canaux TCH (canaux de trafic) au lieu de 12, une durée de trame IP peut être gagnée (1,9 ms à plein débit, 0,45 ms à un demi-débit). Néanmoins, ceci rendrait la planification de la liaison descendante plus difficile car il serait nécessaire d'utiliser la priorité correcte entre les trames IP qui correspondent à la même tranche de temps radio. Une amélioration plus simple pourrait être limitée à la liaison montante uniquement. Ceci n'induit aucun problème dans la liaison descendante, mais procure encore un gain de 0,9 ou de 0,2 ms, au prix d'une petite augmentation de la bande passante (0,2 %).

Conformément à une autre caractéristique de l'invention, permettant d'obtenir une compensation de retard supplémentaire, le procédé peut, en outre, consister à introduire, en liaison montante et/ou en liaison descendante, un décalage temporel entre les différents secteurs ("sector" en anglais) de chaque station de base du réseau.

Par exemple, dans le cadre de la réalisation particulière décrite ci-dessus (en relation notamment avec la figure 1), un gain significatif peut être obtenu en introduisant un décalage dans le temps entre les trois secteurs d'un site.

En effet, si seul un tiers des TRX est synchronisé, la pleine bande passante de l'interface Abis est disponible pour ne transmettre qu'un tiers des informations.

De façon idéale, les trois secteurs sont décalés dans le temps de 4/3 d'une trame TDMA = 6,13 ms (TDMA : Time Division Multiple Access - Accés multiple par division temporelle). En pratique, il est suggéré de les décaler de 10/10/12 tranches de temps de manière à maintenir une horloge synchrone pour les tranches de temps.

Le temps de transmission pour une trame IP de 4 canaux TCH est de 0,63 ms. Le temps de transmission d'une trame IP de la tranche de temps 7 est de 1 ms.

La planification de la transmission plein débit dans le cas d'un tel décalage dans le temps est représentée sur la figure 9 (Sector = Secteur ; timeslots = intervalles de temps).

Le délai UL + DL est de 0,64 ms.

Par comparaison à la spécification 03.05, ceci correspond à 1,5 ms pour Tabisu + Tabisd + Ttransc.

Il en résulte un gain de 21 ms, par comparaison à la spécification 03.05.

Avec une transmission à demi-débit, la situation apparaît complexe car les trois secteurs génèrent 16 blocs de parole qui se chevauchent partiellement.

Elle apparaît beaucoup plus simple lorsque l'on considère qu'une trame IP composite contient tous les canaux TCH reçus durant le même nombre de tranches de temps sur la liaison hertzienne (voir figure 10).

Le pire cas correspond par exemple (comme le montre la figure 10) à la tranche de temps 15 du secteur 2 : 0,74 ms, ce qui correspond à un excellent temps de transmission.

Bien entendu, la même technique de compensation de retard par décalage peut être utilisée sur la liaison descendante. Dans un but de simplicité, elle n'est pas représentée sur les figures annexées.

Le délai de transmission UL + DL est de l'ordre de 1,1 ms. Avec le délai de transcodage, ceci représente 8,1 ms.

L'introduction d'un décalage dans le temps entre les secteurs d'une station BTS présente certaines conséquences sur le système.

Ainsi, réutiliser les séquences de l'un d'entre eux n'est pas possible. En réalité, cette caractéristique est fondée sur l'utilisation d'un groupe commun de fréquences dans les trois secteurs, les collisions étant évitées en utilisant le même numéro de séquence HSN et un décalage d'index MAIO différent. Du fait de la réduction du nombre de TRX disponibles sur un site, la caractéristique de décalage dans le temps peut n'être envisagée qu'à titre d'option.

La synchronisation des tranches ou intervalles de temps n'est pas suffisante pour permettre un transfert totalement synchrone. Ceci peut être résolu soit en décalant les secteurs de 8 tranches de temps (= 1 trame) au lieu de 10 (légèrement moins efficace) ou bien en utilisant un transfert pré-synchronisé avec le même TA (alignement dans le temps) dans les cellules source et cible (uniquement pour les mobiles de phase 2, mais le nombre de mobiles de phase un, forcé à un transfert asynchrone, est maintenant très faible).

La présente invention concerne également un réseau de radiocommunication comprenant une pluralité de stations de base, à chacune desquelles peut être reliée une pluralité de transcodeurs ou de modules de transcodage faisant partie du réseau téléphonique fixe ou d'un réseau analogue, caractérisé en ce qu'il met en oeuvre le procédé de transmission tel que décrit ci-dessus.

L'invention permet par conséquent de minimiser les délais de transmission entre un réseau de radiocommunication et un réseau téléphonique fixe et d'uniformiser les délais de transmission pour tous les terminaux mobiles reliés audit réseau de radiocommunication et en communication avec un terminal dudit réseau fixe.

Ainsi, en sélectionnant un algorithme de mise en paquet et de transmission optimisé, l'introduction d'une transmission par paquets avec les caractéristiques précitées réduit significativement le délai vocal. Un gain de 20 ms peut être obtenu à la fois à plein débit et à demi-débit lorsqu'il n'y a pas d'équipement IP entre le transcodeur et la station BTS (avec 3 x 4 TRX).

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Procédé de transmission bidirectionnelle synchronisée par paquets entre une station de base d'un réseau de radiocommunication et un équipement de transcodage comprenant au moins deux transcodeurs, faisant partie d'un réseau téléphonique fixe ou analogue et relié à cette station, en particulier pour transmettre des données ou informations sonores ou vocales, **caractérisé en ce qu'**il consiste à utiliser en liaison descendante un ordre de priorité pour les tranches ou intervalles de temps d'une trame, inversé par rapport à celui appliqué ou existant en liaison montante.

2. Procédé selon la revendication 1, **caractérisé en ce qu'**il consiste à introduire, en liaison montante et/ou en liaison descendante, un décalage temporel entre les différents secteurs de chaque station de base du réseau.

3. Réseau de radiocommunication utilisant une transmission par paquets et comprenant une pluralité de stations de base, à chacune desquelles peut être reliée une pluralité de transcodeurs ou de modules de transcodage faisant partie du réseau téléphonique fixe ou d'un réseau analogue, **caractérisé en ce qu'**il met en oeuvre le procédé de transmission selon l'une quelconque des revendications 1 et 2.

4. Station de base, mettant en oeuvre un procédé selon l'une quelconque des revendications 1 et 2.

5. Equipement de transcodage, mettant en oeuvre un procédé selon l'une quelconque des revendications 1 et 2.
